# EUROPÄISCHE PATENTSCHRIFT

(11) **EP 1 442 872 B1**
(45) Veröffentlichungstag und Bekanntmachung des Hinweises auf die Patenterteilung: **02.04.2008**
(21) Anmeldenummer: 04001062.1
(22) Anmeldetag: 20.01.2004
(51) Int. Cl.: B29C 67/24, B29K 75/00

(54) **Verfahren und Vorrichtung zur Herstellung von Polyurethan Formteilen**
Process and apparatus for manufacturing molded polyurethane parts
Procédé et dispositif pour la fabrication des pièces moulées en polyuréthane

(30) Priorität: 31.01.2003 DE 10303882
(43) Veröffentlichungstag der Anmeldung: 04.08.2004
(73) Patentinhaber: Hennecke GmbH, 51379 Leverkusen (DE)
(72) Erfinder: Wirth, Jürgen, 51147 Köln (DE); Berghahn, Frank, 53639 Königswinter (DE)
(74) Vertreter: Gosdin, Michael

(56) Entgegenhaltungen:
- EP-A- 0 206 100
- EP-A- 0 673 746
- EP-A- 0 904 916
- WO-A-01/47694
- WO-A-91/18734
- DE-A- 1 952 563
- GB-A- 1 348 726
- US-A- 4 524 044
- US-A- 5 002 475
- DATABASE WPI Section Ch, Week 198805 Derwent Publications Ltd., London, GB; Class A32, AN 1988-033884 XP002282131 & JP 62 294515 A (TOYOTA JIDOSHA KK), 22. Dezember 1987 (1987-12-22)

## Beschreibung

Die Erfindung betrifft ein Verfahren und eine Vorrichtung zur Herstellung von Polyurethan-Formteilen nach dem RIM-Verfahren-(Reaction Injection Molding), bei dem in das Polyurethan-Reaktionsgemisch eindispergiertes Gas durch Beaufschlagung mit Druck durch ein gasförmiges Medium in der Form in Lösung gebracht wird und so schlieren- und fleckenfreie Polyurethan-Formteile erhalten werden.

Polyurethan-Formteile werden nach dem RIM-Verfahren (Reaction Injection Molding) vorwiegend mittels der Hochdruckmisch- und Injektionstechnik aus mindestens einer Isocyanat- und mindestens einer Polyolkomponente hergestellt. Zum Einsatz kommen Hochdruckdosiermaschinen mit Hochdruckmischern, die nach dem Hochdruckgegenstrom-Mischprinzip arbeiten. Im Wesentlichen besteht ein solcher Mischer aus einer Mischkammer und einem Auslaufsystem. In die Mischkammer werden die Polyurethan-Reaktionskomponenten (mindestens zwei) bei Drücken von 100 bis 300 bar mittels Düsen eingespritzt. Die hohen Verdüsungsgeschwindigkeiten der flüssigen Komponenten erzeugten Wirbel in der Mischkammer, die eine innige Vermischung der Reaktionskomponenten bewirken. Den Mischkammerauslass zum Auslaufkanal bildet in der Regel eine Drosselstelle. Die Drosselstelle hat die Funktion, die Mischkammer weitestgehend abzuschließen, damit die erzeugten Mischwirbel möglichst lange in der Mischkammer verweilen. Die Mischkammerauslass wird möglichst klein gewählt, damit herrschen im Mischkammerauslass relativ große Strömungsgeschwindigkeiten, die im Auslaufkanal beruhigt werden sollen. Die Strömungsgeschwindigkeit der Reaktionsmischung wird im Auslaufkanal soweit reduziert, dass nur noch eine Quellströmung vorliegt, mit der dann die formteilbildende Kavität gefüllt wird.

Die Problematik ist nun diese, dass sowohl Mischkammer als auch Auslaufkanal vor dem Eintritt der flüssigen Reaktionskomponenten mit Luft gefüllt sind. Bei Beginn der Injektion führen die hohen Strömungsgeschwindigkeiten dazu, dass diese Luft in die Flüssigkeit eindispergiert wird und zwar so lange, bis Mischkammer und Auslaufkanal vollständig mit Flüssigkeit gefüllt sind. Damit ist es unvermeidbar, dass zunächst schaumiges, gasbeladenes Reaktionsgemisch in die Kavität eingespritzt wird, bis im weiteren Verlauf der Injektion gasfreies Reaktionsgemisch nachströmt.

Im fertigen Formteil erscheint das zu Beginn der Injektion in die Form eingebrachte Polyurethan-Material als helle Schlieren oder Flecke. Insbesondere bei eingefärbten, nicht schäumenden Polyurethan-Formteilen sind diese Schlieren bzw. Farbflecke stark ausgeprägt, so dass ein späteres Lackieren oder ein Inmouldpainting zwingend erforderlich ist.

In der Vergangenheit sind diverse Vorschläge gemacht worden, um dieses Problem zu lösen.

EP-A1-1 029 652 beschreibt einen Mischkopf, bei dem die Mischkammer vor Schussbeginn unter Vakuum gesetzt wird. Um das Vakuum aufbringen zu können, ist am Mischkammerauslauf ein spezielles Vorschlussorgan angeordnet. Die beschriebene Vorrichtung kann für Rührermischköpfe und einen Gemischeintrag in offene Formen vorteilhaft funktionieren, hat aber den entscheidenden Nachteil, dass Mischkammer und Verschlussorgan nach jedem Schuss mit einem geeigneten Spülmittel gereinigt werden müssen. Diese häufige Reinigung ist in der RIM-Anwendung mit ihren hohen Schuss-Zahlen jedoch völlig indiskutabel.

EP-A2-0 255 895 beschreibt einen Hochdruckmischkopf, bei dem zwischen den einzelnen Schüssen Reaktionsgemisch im Mischkopfauslaufsystem verbleibt und dadurch die Mischkammerluft eliminiert wird. Dieses Verfahren hat jedoch den Nachteil, dass Reaktionszeiten und Schussfolge streng aufeinander abgestimmt sein müssen. Das Verfahren funktioniert daher nur bei schnellen Schussfolgen.

DE-A1-3 420 517 beschreibt ein spezielles Mischkopfsystem, bei dem bei Schussbeginn die Mischkammer kein freies Volumen hat und die Mischkammer sich erst mit dem einfließenden Reaktionsgemisch ausbildet.

Dieses Prinzip hat jedoch den Nachteil, dass es nicht generell und vor allem nicht für die zurzeit gängigen Mischköpfe anwendbar ist.

Es bestand also nach wie vor die Aufgabe, für die beschriebene Problematik eine praktikable, einfache und allgemein anwendbar Lösung zu finden.

Die Aufgabe der vorliegenden Erfindung bestand daher insbesondere darin, ein Verfahren zur Herstellung von Polyurethan-Formteilen nach dem RIM-Verfahren zur Verfügung zu stellen, mit dem schlieren- und fleckenfreie Polyurethan-Formteile hergestellt werden können.

Die Erfindung betrifft ein Verfahren zur Herstellung von Polyurethan-Formteilen in der erfindungsgemäßen Vorrichtung nach dem RIM-Verfahren, bei dem mindestens eine Isocyanatkomponente und mindestens eine Polyolkomponente in eine Mischkammer 3 dosierend gefördert werden, in der Mischkammer 3 zu einem Polyurethan-Reaktionsgemisch vermischt werden und das Polyurethan-Reaktionsgemisch anschließend über einen Auslaufkanal 4 in die Kavität 6 einer Form 1 ausgetragen wird und bei dem auf das Polyurethan-Reaktionsgemisch in der Kavität 6 mittels eines gasförmigen Druckmediums ein Druck ausgeübt wird, der so hoch ist, dass bei Schussbeginn in das Polyurethan-Reaktionsgemisch eindispergiertes Gas in dem Polyurethan-Reaktionsgemisch gelöst wird.

WO-A-9118734 beschreibt ein Verfahren zur Herstellung von Polyurethan-Formteilen nach dem RIM-Verfahren, bei dem mindestens eine Isocyanatkomponente und mindestens eine Polyolkomponente in eine Mischkammer dosierend gefördert werden, in der Mischkammer zu einem Polyurethan-Reaktionsgemisch vermischt werden und das Polyurethan-Reaktionsgemisch anschließend über einen Auslaufkanal in die Kavität einer Form ausgetragen wird und bei dem auf das Polyurethan-Reaktionsgemisch in der Kavität mittels eines gasförmigen Druckmediums ein Druck ausgeübt wird, der so hoch ist, dass bei Schussbeginn in das Polyurethan-Reaktionsgemisch eindispergiertes Gas in dem Polyurethan-Reaktionsgemisch gelöst wird.

Als gasförmiges; Druckmedium sind grundsätzlich alle üblichen Gase wie Luft, Stickstoff oder Kohlendioxid geeignet. Bevorzugt wird das gasförmige Druckmedium so ausgewählt, dass es bei gleichem Partialdruck schlechter (das heißt weniger schnell und in geringeren Mengen) in Lösung geht als das in das Polyurethan-Reaktionsgemisch eindispergierte Gas.

Um eine schnelle Lösung des eindispergierten Gases zu erreichen wird mit dem gasförmigen Druckmedium vorzugsweise ein solcher Druck ausgeübt, der 1,1 bis 10 mal, besonders bevorzugt 2 bis 5 mal, ganz besonders bevorzugt 2 bis 3 mal höher ist als der Lösungspartialdruck des in das Polyurethan-Reaktionsgemisch eindispergierten Gases nach seiner vollständigen Lösung. Der erforderliche bzw. geeignete Druck wird vor der Inbetriebnahme des Verfahrens empirisch durch Versuche, bei denen der Druck schrittweise erhöht wird, ermittelt.

Bevorzugt erfolgt die Druckbeaufschlagung mit dem gasförmigen Druckmedium schlagartig.

Ebenfalls bevorzugt erfolgt die Druckbeaufschlagung mit dem gasförmigen Druckmedium nach Schussbeginn zeitversetzt und erst dann, wenn die Mischkammer und der Auslaufkanal mit dem Polyurethan-Reaktionsgemisch weitgehend gefüllt sind. Dabei bedeutet weitgehend gefüllt vorzugsweise eine Füllung zu mindestens 50%, besonders bevorzugt zu mindestens 80% und ganz besonders bevorzugt zu mindestens 95%.

Die Ausübung des Drucks mit dem gasförmigen Druckmedium wird bevorzugt zu einem Zeitpunkt beendet, bei dem das in das Polyurethan-Reaktionsgemisch eindispergierte Gas vollständig gelöst ist. Dadurch wird erreicht, dass das hergestellte Polyurethan-Formteil flecken- und schlierenfrei ist.

Die Ausübung des Drucks mit dem gasförmigen Druckmedium kann beispielsweise in zwei oder mehr Stufen beendet werden wenn das in das Polyurethan-Reaktionsgemisch eindispergierte Gas vollständig gelöst ist. Dies kann erreicht werden, indem der mit dem gasförmigen Druckmedium ausgeübte Druck, der 1,1 bis 10 mal, besonders bevorzugt 2 bis 5 mal, ganz besonders bevorzugt 2 bis 3 mal höher ist als der Lösungspartialdruck des in das Polyurethan-Reaktionsgemisch eindispergierten Gases nach seiner vollständigen Lösung, zunächst auf einen Druck reduziert wird, der in etwa dem Lösungspartialdruck entspricht, und anschließend weiter reduziert wird.

Vorzugsweise wird die Kavität, die Mischkammer und der Mischkammerauslaufkanal vor Schussbeginn mit einem im Reaktionsgemisch besonders gut löslichen Gas wie Kohlendioxid gespült. Dadurch wird erreicht, dass das sich dort befindende Gas (in der Regel Luft) durch Kohlendioxid ersetzt wird. Aufgrund der guten Löslichkeit von Kohlendioxid in der Polyurethan-Reaktionsmischung sind anschließend deutlich niedrigere Drücke des gasförmigen Druckmediums notwendig, um das eindispergierte Kohlendioxid in der Polyurethan-Reaktionsmischung zu lösen. Drücke von beispielsweise 1,1 bis 100 bar, vorzugsweise 2 bis 50 bar, insbesondere bevorzugt 2 bis 20 bar Absolutdruck sind im allgemeinen ausreichend.

Kohlendioxid kann aber auch sowohl als Spülgas als auch als gasförmiges Druckmedium verwendet werden.

Die Erfindung betrifft auch eine Vorrichtung zur Herstellung von Polyurethan-Formteilen enthaltend einen Mischkopf mit einer Mischkammer, einem Auslaufkanal sowie einem Näherungsschalter, ferner enthaltend eine Form mit einem oberen Formteil und einem unteren Formteil, einem Anguss, einer Kavität, einem Gaskanal und einer Weichdichtung, ferner enthaltend eine der Form zugeordnete Gasstation mit einem Kompressor, einem Druckbehälter, einem Ventil, einem Druckaufnehmer sowie einer Leitung und einem Kanal im oberen Formteil, die das Ventil mit dem Gaskanal verbinden, ferner enthaltend eine Anlagensteuerung mit einer Impulsleitung zum Näherungsschalter, einer Impulsleitung zum Druckaufnehmer, einer Impulsleitung zum Ventil und einer Impulsleitung zum Kompressor, wobei die Anlagensteuerung ein einstellbares Zeitglied aufweist, mit dem die Schaltung des Ventils mit einer einstellbaren Zeitverzögerung nach Eingang eines Signals vom Näherungsschalter, das den Schussbeginn anzeigt, erfolgen kann.

Die Erfindung wird anhand der nachfolgenden Figuren näher erläutert. Es zeigen
- Figur 1: eine Form und einen Mischkopf für den Einsatz in dem erfindungsgemäßen Verfahren.
- Figur 2: eine schematische Darstellung einer Anlage zur Durchführung des erfindungsgemäßen Verfahrens, bei dem mittels eines gasförmigen Druckmediums Druck auf das Polyurethan-Reaktionsgemisch in der Kavität ausgeübt werden kann.
- Figur 3: eine schematische Darstellung einer Anlage zur Durchführung des erfindungsgemäßen Verfahrens, bei dem die Kavität zusätzlich mit einem Spülgas gespült werden kann.

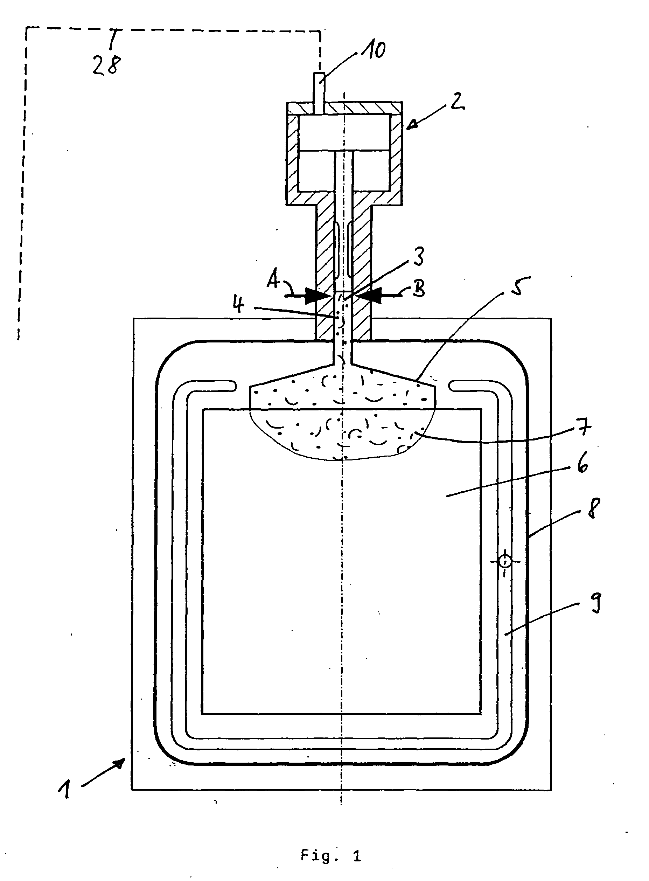

Figur 1 zeigt eine Form 1 und einen mit der Form 1 verbundenen Mischkopf 2 zur Anwendung in dem erfindungsgemäßen Verfahren. Die Polyurethan-Reaktionskomponenten Polyol A und Isocyanat B werden in die Mischkammer 3 eingedüst und verlassen die Mischkammer 3 als Polyurethan-Reaktionsgemisch durch den Auslaufkanal 4. Dabei ist der Übergang zwischen Mischkammer 3 und Auslaufkanal 4 in Figur 1 fließend dargestellt. Tatsächlich ist zwischen Mischkammer 3und Auslaufkanal 4 im Allgemeinen ein Drosselorgan angeordnet. Das Polyurethan-Reaktionsgemisch tritt dann über den Anguss 5 in die Kavität 6 ein.

Durch die große Turbulenz und die hohe Strömungsgeschwindigkeit bildet sich in der Mischkammer 3 und dem Auslaufkanal 4 mit der zu Beginn der Verdüsung vorhandenen Luft eine Dispersion 7 der Luft in dem Polyurethan-Reaktionsgemisch. Diese Dispersion wird dann in die Kavität 6 eingetragen. Von dispergierter Luft freies Polyurethan-Reaktionsgemisch fließt nach.

Die Form 1 weist eine Weichdichtung 8 und einen Gaskanal 9 auf, über den das zur Druckausübung benötigte gasförmige Druckmedium in die Kavität eindringt. Der Mischkopf 2 ist zudem mit einem Näherungsschalter 10 ausgerüstet, der mit der Anlagensteuerung (nicht dargestellt in Figur 1) über die Impulsleitung 28 verbunden ist und zu Schussbeginn und Schussende ein Signal an die Anlagensteuerung sendet. So kann die Beaufschlagung mit Druck zeitgesteuert, beispielsweise nach einem bestimmten Zeitintervall nach Schussbeginn, erfolgen.

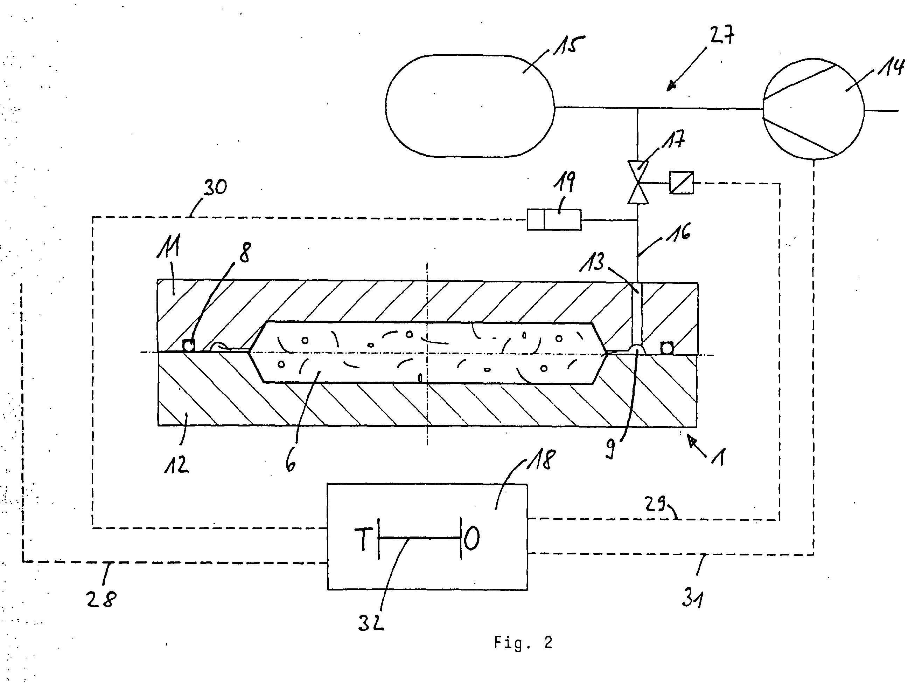

Figur 2 zeigt eine Anlage zur Durchführung des erfindungsgemäßen Verfahrens mit einer Form 1 bestehend aus einem oberen Formteil 11 und einem unteren Formteil 12, wobei sich zwischen den Formteilen 11 und 12 die Kavität 6 befindet. In der Trennebene zwischen den Formteilen 11 und 12 sind die Weichdichtung 8 und der Gaskanal 9 angeordnet. Die Weichdichtung 8 ist dabei in eine Nut in dem oberen Formteil 11 eingelegt. Der Gaskanal 9 ist als Nut im oberen Formteil 11 ausgebildet und über einen Kanal 13 im oberen Formteil 11 mit der Gasversorgung verbunden.

Die Gasversorgung (Gasstation 27) besteht aus einem Kompressor 14, mit dem das zur Druckausübung benötigte gasförmige Druckmedium (z.B. Druckluft) auf den erforderlichen Druck gebracht wird. Der Kompressor fördert das gasförmige Druckmedium in einen Druckbehälter 15 und hält es auf Druck.

Der Kanal 13 ist mit dem Druckbehälter 15 über eine Leitung 16 verbunden. In der Leitung 16 ist ein Ventil 17 angeordnet, welches von der Anlagensteuerung 18 über die Impulsleitung 29 geöffnet und geschlossen werden kann. Die Anlagensteuerung 18 ist auch mit dem Näherungsschalter des Mischkopfs (nicht dargestellt in Figur 2) über die Impulsleitung 28 verbunden.

Wird das Ventil 17 von der Anlagensteuerung 18 geöffnet, so strömt das gasförmige Druckmedium aus dem Druckbehälter 15 durch die Leitung 16 in den Kanal 13 und den Gaskanal 9 und dringt durch die Trennebene zwischen den Formteilen 11 und 12 in die Kavität 6 ein, in der sich das Polyurethan-Reaktionsgemisch befindet. Dabei wird das Ventil 17 möglichst schlagartig und erst nach Schussbeginn zeitversetzt geöffnet, wenn die Mischkammer und der Auslaufkanal (dargestellt in Figur 1) mit Polyurethan-Reaktionsgemisch weitgehend gefüllt sind. Der Druck wird dabei so gewählt, dass das in das Polyurethan-Reaktionsgemisch eindispergierte Gas vollständig in Lösung geht. Die Anlagensteuerung 18 weist dazu ein einstellbares Zeitglied 32 auf, mit dem die Schaltung des Ventils 17 mit einer Zeitverzögerung nach Eingang eines Signals vom Näherungsschalter über Impulsleitung 28, mit dem der Beginn des Schusses durch Freigabe der Mischkammer (Mischkammer 3 in Figur 1) signalisiert wird, erfolgen kann.

Der Druckaufnehmer 19 signalisiert der Anlagensteuerung 18 über die Impulsleitung 30 die Höhe des Drucks hinter dem Ventil 17. Mit dieser Information kann die Anlagensteuerung 18 die Stellung des Ventils 17 und die Höhe des Vordrucks in dem Druckbehälter 15 durch Ansteuerung des Kompressors 14 über die Impulsleitung 31 regeln.

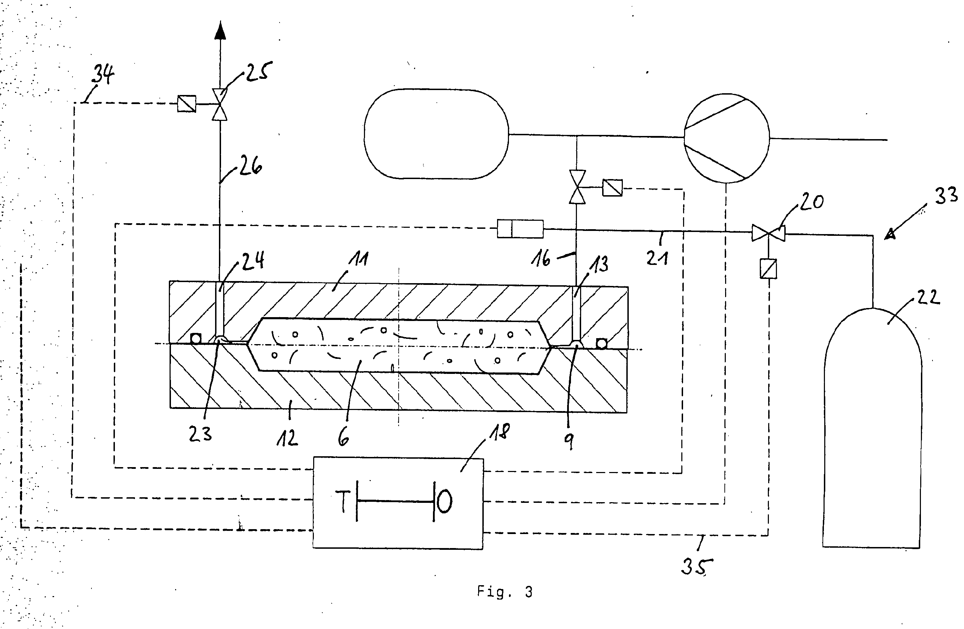

Figur 3 zeigt eine Ausführungsform der Anlage zur Durchführung des erfindungsgemäßen Verfahrens, bei der die Kavität 6 vor jedem Schuss mit einem Spülgas aus der Spülstation 33, vorzugsweise mit Kohlendioxid, gespült werden kann.

Dazu wird vor jedem Schuss von der Anlagensteuerung 18 ein Ventil 20 über die Impulsleitung 35 geöffnet, durch welches das Spülgas aus einem Druckbehälter 22 über die Leitung 21, welche in Leitung 16 mündet, in den Kanal 13 der Form 1 strömt. Das Spülgas strömt dann durch den Gaskanal 9 und die Trennebene zwischen dem oberen Formteil 11 und dem unteren Formteil 12 in die Kavität 6 und verdrängt das sich in der Kavität 6 befindende Gas. Das Gas und nachströmendes Spülgas verlässt die Kavität 6 durch die Trennebene zwischen dem oberen Formteil 11 und dem unteren Formteil 12 und strömt durch den Gaskanal 23, den Kanal 24 im oberen Formteil 11, Leitung 26 und Ventil 25, welches ebenfalls von der Anlagensteuerung 18 über die Impulsleitung 34 geöffnet und geschlossen werden kann, nach draußen. Die Gaskanäle 9 und 23 sind dabei jeweils als Nuten im oberen Formteil 11 zwischen Weichdichtung und Kavität ausgebildet und liegen auf sich gegenüberliegenden Seiten der Kavität. Die Gaskanäle 9 und 23 sind dabei nicht miteinander verbunden. Dadurch wird erreicht, dass das Spülgas aus Gaskanal 9 durch die Trennebene zwischen den Formteilen 11 und 12 in die Kavität 6 strömen muss und das sich darin befindende Gas verdrängt.

Die Beaufschlagung des Polyurethan-Reaktionsgemisches mit Druck nach Schussbeginn erfolgt wie oben für Figur 2 dargestellt mit der Maßgabe, dass Ventil 25 während der Ausübung des Drucks geschlossen ist.

Der Vorteil dieser Ausführungsform liegt darin, dass bei Ersatz von Luft in der Kavität 6 durch Kohlendioxid die notwendigen Drücke des gasförmigen Druckmediums zur Lösung des in der Polyurethan-Reaktionsmischung eindispergierten Kohlendioxids niedrig sind, da Kohlendioxid in den gängigen Polyurethan-Reaktionsmischungen gut löslich ist. Als gasförmiges Druckmedium können dann Luft, Stickstoff oder Kohlendioxid oder andere Gase eingesetzt werden.

## Patentansprüche

1. Verfahren zur Herstellung von Polyurethan-Formteilen in einer Vorrichtung gemäß Anspruch 9 nach dem RIM-Verfahren, bei dem mindestens eine Isocyanatkomponente und mindestens eine Polyolkomponente in eine Mischkammer (3) dosierend gefördert werden, in der Mischkammer (3) zu einem Polyurethan-Reaktionsgemisch vermischt werden und das Polyurethan-Reaktionsgemisch anschließend über einen Auslaufkanal (4) in die Kavität (6) einer Form (1) ausgetragen wird und bei dem auf das Polyurethan-Reaktionsgemisch in der Kavität (6) mittels eines gasförmigen Druckmediums ein Druck ausgeübt wird, der so hoch ist, dass bei Schussbeginn in das Polyurethan-Reaktionsgemisch eindispergiertes Gas in dem Polyurethan-Reaktionsgemisch gelöst wird.

2. Verfahren nach Anspruch 1, wobei der mit dem gasförmigen Druckmedium ausgeübte Druck mindestens 1,1 bis 10 mal höher ist als der Lösungspartialdruck des in das Polyurethan-Reaktionsgemisch eindispergierten Gases nach seiner vollständigen Lösung.

3. Verfahren nach einem der Ansprüche 1 oder 2, wobei die Druckbeaufschlagung mit dem gasförmigen Druckmedium schlagartig erfolgt.

4. Verfahren nach einem der Ansprüche 1 bis 3, wobei die Druckbeaufschlagung mit dem gasförmigen Druckmedium nach Schussbeginn zeitversetzt und erst dann erfolgt, wenn die Mischkammer (3) und der Auslaufkanal (4) mit dem Polyurethan-Reaktionsgemisch weitgehend gefüllt sind.

5. Verfahren nach einem der Ansprüche 1 bis 4, wobei die Ausübung des Drucks mit dem gasförmigen Druckmedium zu einem Zeitpunkt beendet wird, bei dem das in die in das Polyurethan-Reaktionsgemisch eindispergierte Gas vollständig gelöst ist.

6. Verfahren nach Anspruch 2, wobei die Ausübung des Drucks mit dem gasförmigen Druckmedium gestuft beendet wird wenn das in das Polyurethan-Reaktionsgemisch eindispergierte Gas vollständig gelöst ist, indem der mit dem gasförmigen Druckmedium ausgeübte Druck, der 1,1 bis 10 mal höher ist als der Lösungspartialdruck des in das Polyurethan-Reaktionsgemisch eindispergierten Gases nach seiner vollständigen Lösung, zunächst auf einen Druck reduziert wird, der in etwa dem Lösungspartialdruck entspricht, und anschließend weiter reduziert wird.

7. Verfahren nach einem der Ansprüche 1 bis 6, wobei vor Schussbeginn die Kavität (6), die Mischkammer (3) und der Auslaufkanal (4) mit Kohlendioxid gespült wird.

8. Verfahren nach Anspruch 7, wobei Kohlendioxid als Spülgas und als gasförmiges Druckmedium verwendet wird.

9. Vorrichtung zur Herstellung von Polyurethan-Formteilen enthaltend einen Mischkopf (2) mit einer Mischkammer (3), einem Auslaufkanal (4) sowie einem Näherungsschalter (10), ferner enthaltend eine Form (1) mit einem oberen Formteil (11) und einem unteren Formteil (12), einem Anguss (5), einer Kavität (6), einem Gaskanal (9) und einer Weichdichtung (8), ferner enthaltend eine der Form (1) zugeordnete Gasstation (27) mit einem Kompressor (14), einem Druckbehälter (15), einem Ventil (17), einem Druckaufnehmer (19) sowie einer Leitung (16) und einem Kanal (13) im oberen Formteil (11), die das Ventil (17) mit dem Gaskanal (9) verbinden, ferner enthaltend eine Anlagensteuerung (18) mit einer Impulsleitung (28) zum Näherungsschalter (10), einer Impulsleitung (30) zum Druckaufnehmer (19), einer Impulsleitung (29) zum Ventil (17) und einer Impulsleitung (31) zum Kompressor (14), wobei die Anlagensteuerung (18) ein einstellbares Zeitglied (32) aufweist, mit dem die Schaltung des Ventils (17) mit einer einstellbaren Zeitverzögerung nach Eingang eines Signals vom Näherungsschalter (10), das den Schussbeginn anzeigt, erfolgen kann.

10. Vorrichtung nach Anspruch 9, wobei der Gasstation (27) eine Spülstation (33), enthaltend einen Druckbehälter (22) und ein Ventil (20) für das Spülgas sowie eine Leitung (21), über welche die Spülstation (33) mit Leitung (16) und Kanal (13) zum Gaskanal (9) verbunden ist, zugeordnet ist, wobei das Ventil (20) über die Impulsleitung (35) mit der Anlagensteuerung (18) verbunden ist.

## Claims

1. A method for producing polyurethane mouldings in an apparatus according to claim 9 by the RIM process, in which at least one isocyanate component and at least one polyol component are conveyed in metered matter into a mixing chamber (3), are mixed in the mixing chamber (3) to yield a polyurethane reaction mixture and the polyurethane reaction mixture is then discharged via an outlet duct (4) into the cavity (6) of a mould (1) and in which a pressure is exerted on the polyurethane reaction mixture in the cavity (6) by means of a gaseous pressure medium, which pressure is of a level such that, at the beginning of the shot, gas dispersed into the polyurethane reaction mixture is dissolved in the polyurethane reaction mixture.

2. A method according to claim 1, wherein the pressure exerted with the gaseous pressure medium is at least 1.1 to 10 times higher than the solution partial pressure of the gas dispersed into the polyurethane reaction mixture after complete dissolution of said gas.

3. A method according to either claim 1 or claim 2, wherein application of pressure with the gaseous pressure medium proceeds abruptly.

4. A method according to any one of claims 1 to 3, wherein application of pressure with the gaseous pressure medium is delayed after the beginning of the shot and does not take place until the mixing chamber (3) and the outlet duct (4) are largely filled with the polyurethane reaction mixture.

5. A method according to any one of claims 1 to 4, wherein exertion of pressure with the gaseous pressure medium is stopped at a time at which the gas dispersed into the polyurethane reaction mixture is completely dissolved.

6. A method according to claim 2, wherein exertion of pressure with the gaseous pressure medium is stopped in staged manner when the gas dispersed into the polyurethane reaction mixture is completely dissolved, by the pressure exerted with the gaseous pressure medium, which is 1.1 to 10 times higher than the solution partial pressure of the gas dispersed into the polyurethane reaction mixture after complete dissolution of said gas, initially being reduced to a pressure which approximately matches the solution partial pressure, and then being reduced further.

7. A method according to any one of claims 1 to 6, wherein, before the beginning of the shot, the cavity (6), the mixing chamber (3) and the outlet duct (4) are flushed with carbon dioxide.

8. A method according to claim 7, wherein carbon dioxide is used as the flushing gas and as the gaseous pressure medium.

9. An apparatus for producing polyurethane mouldings containing a mixing head (2) comprising a mixing chamber (3), an outlet duct (4) and a proximity switch (10), further containing a mould (1) comprising an upper mould part (11) and a lower mould part (12), a gate (5), a cavity (6), a gas duct (9) and a soft packing (8), further containing a gas station (27) assigned to the mould (1), said gas station (27) comprising a compressor (14), a pressure vessel (15), a valve (17), a pressure sensor (19) and a line (16) and a duct (13) in the upper mould part (11), which connect the valve (17) with the gas duct (9), further containing a system controller (18) comprising a pulse line (28) to the proximity switch (10), a pulse line (30) to the pressure sensor (19), a pulse line (29) to the valve (17) and a pulse line (31) to the compressor (14), wherein the system controller (18) comprises an adjustable timer (32) with which the valve (17) may be switched with an adjustable time delay after input of a signal from the proximity switch (10) indicating the beginning of the shot.

10. An apparatus according to claim 9, wherein a flushing station (33) containing a pressure vessel (22) and a valve (20) for the flushing gas and a line (21), via which the flushing station (33) is connected with line (16) and duct (13) to the gas duct (9), is assigned to the gas station (27), wherein the valve (20) is connected via the pulse line (35) with the system controller (18).

## Revendications

1. Procédé de production de pièces moulées en polyuréthane dans un dispositif selon la revendication 9 selon le procédé RIM dans lequel au moins un composant isocyanate et au moins un composant polyol sont transportés de manière dosée dans une chambre mélangeuse (3), sont mélangés dans la chambre mélangeuse (3) en un mélange réactionnel de production de polyuréthane, puis le mélange réactionnel de production de polyuréthane est extrait par le biais d'un canal de sortie (4) dans la cavité (6) d'un moule (1), et dans lequel une pression est exercée sur le mélange gazeux de production de polyuréthane dans la cavité (6) au moyen d'un agent comprimé gazeux, pression qui est si élevée que le gaz dispersé dans le mélange réactionnel de production de polyuréthane au début d'un cycle de moulage est dissous dans le mélange réactionnel de production de polyuréthane.

2. Procédé selon la revendication 1 où la pression exercée avec l'agent comprimé gazeux est au moins 1,1 à 10 fois supérieure à la pression partielle de dissolution du gaz dispersé dans le mélange réactionnel de production de polyuréthane après sa dissolution totale.

3. Procédé selon l'une des revendications 1 ou 2, où la mise sous pression avec l'agent comprimé gazeux a lieu brusquement.

4. Procédé selon l'une des revendications 1 à 3 où la mise sous pression avec l'agent comprimé gazeux est décalée dans le temps après le début d'un cycle de moulage et n'a lieu que quand la chambre mélangeuse (3) et le canal de sortie (4) sont remplis sensiblement complètement de mélange réactionnel de production de polyuréthane.

5. Procédé selon l'une des revendications 1 à 4 où l'application de la pression avec l'agent comprimé gazeux est terminée à un instant auquel le gaz dispersé dans le mélange réactionnel de production de polyuréthane est totalement dissous.

6. Procédé selon la revendication 2 où l'application de la pression avec l'agent comprimé gazeux est terminée par étapes quand le gaz dispersé dans le mélange réactionnel de production de polyuréthane est totalement dissous, par le fait que la pression exercée avec l'agent comprimé gazeux, qui est 1,1 à 10 fois supérieure à la pression partielle de dissolution du gaz dispersé dans le mélange réactionnel de production de polyuréthane après sa dissolution totale, est réduite tout d'abord à une pression qui correspond sensiblement à la pression partielle de dissolution, après quoi elle est réduite encore.

7. Procédé selon l'une des revendications 1 à 6 où, avant le début d'un cycle de moulage, la cavité (6), la chambre mélangeuse (3) et le canal de sortie (4) sont nettoyés avec du dioxyde de carbone.

8. Procédé selon la revendication 7 où du dioxyde de carbone est utilisé comme gaz de nettoyage et comme agent comprimé gazeux.

9. Dispositif pour produire des pièces moulées en polyuréthane contenant une tête mélangeuse (2) avec une chambre mélangeuse (3), un canal de sortie (4) ainsi qu'un commutateur de proximité (10), contenant en outre un moule (1) avec une partie de moule supérieure (11) et une partie de moule inférieure (12), une entrée (5), une cavité (6), un canal à gaz (9) et un joint d'étanchéité souple (8), contenant en outre un poste de gaz (27) associé au moule (1) avec un compresseur (14), un récipient à pression (15), une vanne (17), un capteur de pression (19) ainsi qu'une ligne (16) et un canal (13) dans la partie de moule supérieure (11), qui relient la vanne (17) avec le canal à gaz (9), contenant en outre une commande de l'installation (18) avec une ligne d'impulsions (28) conduisant au commutateur de proximité (10), une ligne d'impulsions (30) conduisant au capteur de pression (19), une ligne d'impulsions (29) conduisant à la vanne (17) et une ligne d'impulsions (31) conduisant au compresseur (14), où la commande de l'installation (18) comporte un organe temporisateur réglable (32) avec lequel la commutation de la vanne (17) peut se dérouler avec un retard temporel réglable après l'arrivée d'un signal du commutateur de proximité (10), qui indique le début d'un cycle de moulage.

10. Dispositif selon la revendication 9 où un poste de nettoyage (33), contenant un récipient à pression (22) et une vanne (20) pour le gaz de nettoyage ainsi qu'une ligne (21), par laquelle le poste de nettoyage (33) est relié par la ligne (16) et le canal (13) au canal à gaz (9), est associé au poste de gaz (27), où la vanne (20) est reliée à la commande de l'installation (18) par le biais de la ligne d'impulsions (35).
